# EUROPEAN PATENT APPLICATION

(11) **EP 2 381 651 A1**
(43) Date of publication of application: **26.10.2011**
(21) Application number: 10305424.3
(22) Date of filing: 22.04.2010
(51) Int. Cl.: H04L 29/12

(54) **Method of generating an internet protocol address**

(71) Applicant: Gemalto SA, 92190 Meudon (FR)
(72) Inventor: Lacouture, Patrice, 13850, GREASQUE (FR)

(57) **Abstract**

The invention is a method of generating an Internet Protocol address intended to be assigned to a portable electronic token. The address is made of a prefix and a suffix. A first identifier is being associated to an external entity. A second identifier is associated to the token. The token comprises said first and second identifiers. The suffix comprises first and second parts and the method comprises the following steps:
a) in said token, generating the first part from said first identifier,
b) in said token, generating the second part from said second identifier by applying a function F which is an injective function.

## Description

### (Field of the invention)

The present invention relates to methods of generating Internet Protocol addresses. It relates particularly to methods of generating unique Internet Protocol addresses intended to be assigned to portable secure electronic tokens.

### (Background of the invention)

IPv6 stands for "Internet Protocol Version 6". IPv6 is an IP protocol developed by the Internet Engineering Task Force (IETF) to take the place of the IPv4. IPv6 is proposed for addressing the problems and deficiencies with IPv4 and has brought out improvements in various aspects such as routing, auto configuration and the like. IPv6 should completely take the dominant place of IPv4 in the Internet after a period of their coexistence. IPv6 has the following characters in comparison with IPv4: a simplified head; flexible extension; a hierarchical address structure; a plug-and-play networking approach; authentication and encryption at the network layer; fulfillment of Quality of Service; and a better support for mobile communications.

IPv6 extends the length of a current IP address by a factor of 4, i.e., the length of 32 bits for current IPv4 is extended to 128 bits, so as to support a large number of network nodes. Thus, the total number of the IPv6 addresses is very large. IPv6 supports more levels of address hierarchy in that its address space is designed to be divided as per different address prefixes, and the hierarchical address structure is used to facilitate rapid forwarding of data packages by a router in a backbone network.

New generation of electronic tokens will embed TCP/IP stacks and will require IP addresses. An IPv6 address will be individually assigned to new electronic tokens. Each assigned IPv6 address must be unique.

The IPv6 address is the concatenation of a prefix and a suffix. As defined in the ETSI 102.483 and IETF RFC 4862 standard, the suffix may be generated into the token itself. The current ETSI 102.483 standard does not specify how to ensure that the self-generated suffix lead to a unique address.

There is a need for providing a method allowing to guarantee the uniqueness of the generated IP addresses.

### (Summary of the Invention)

An object of the invention is to solve the above mentioned technical problem.

The object of the present invention is a method of generating an Internet Protocol address which is intended to be assigned to a portable electronic token. The address is made of a prefix and a suffix. A first identifier is associated to an external entity. A second identifier is associated to the token. The token comprises said first and second identifiers. The suffix comprises first and second parts. The method comprises the following steps:
a) in said token, generating the first part from said first identifier,
b) in said token, generating the second part from said second identifier by applying a function F, said function F being an injective function.

Advantageously, the Internet Protocol address may be an IPV6 address.

In one embodiment, the external entity may be the manufacturer of the token or the vendor of the token.

Advantageously, the function F may be an irreversible function.

In one embodiment, the function F may be based on a hash function.

Advantageously, the token may be a smart card or a secure token.

Another object of the invention is a portable electronic token comprising first and second identifiers. The first identifier is associated to an external entity. The second identifier is associated to the token. An Internet Protocol address is intended to be assigned to the electronic token. This Internet Protocol address is made of a prefix and a suffix. The suffix is made of first and second parts. The electronic token comprises a first means capable of generating the first part from said first identifier. The electronic token comprises a second means capable of generating the second part from the second identifier by applying a function F which is an injective function.

Advantageously, the electronic token may comprise a third means adapted to generate the suffix from said first and second parts.

In one embodiment, the Internet Protocol address may be an IPv6 address.

Advantageously, the external entity may be the manufacturer of the electronic token or the vendor of the electronic token.

In one embodiment, the function F may be an irreversible function.

Advantageously, the function F may be based on a hash function.

In one embodiment, the electronic token may be a smart card or a secure token.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts the structure of an IP address generated according to the invention; and
- Figure 2 depicts schematically the architecture of an electronic token according to one embodiment of the invention.

### (Detailed description of the preferred embodiments)

The invention may apply to any types electronic token which need an Internet Protocol address. In particular, the electronic token may be a secure token like an enhanced USB token, a contactless token or a smart card. The invention is well-suited for managing IPv6 addresses and may apply to all set of network addresses which have the same kind of requirements.

The invention relies on the fact that all generated suffix values are unique whatever the prefix value is.

The invention relieves the issuer of the electronic token of the generation of IP addresses. In particular, in the Telecom domain, the invention relieves the Telecom operator of the IP address generation for Universal Integrated Circuit Cards (UICC).

An advantage of the invention is to keep the currently deployed framework unchanged. In particular, the invention is independent of Dynamic Host Configuration Protocol (DHCP) server.

Another advantage of the invention is to use computing resources of the token instead of computing resources of an external machine for generating IP address. Thus for a large number of tokens, there is no heavy workload targeting an external machine. For example, when the token are SIM cards, the invention relieves the server of the Telecom operator of the address generation treatments.

Moreover, according to the invention every generated address is unique. Thus there is no wasted computing operation and no network traffic as it may happen when duplicate address detection is performed after the address generation.

Thanks to the invention, no heavy cryptographic algorithm is required in the token.

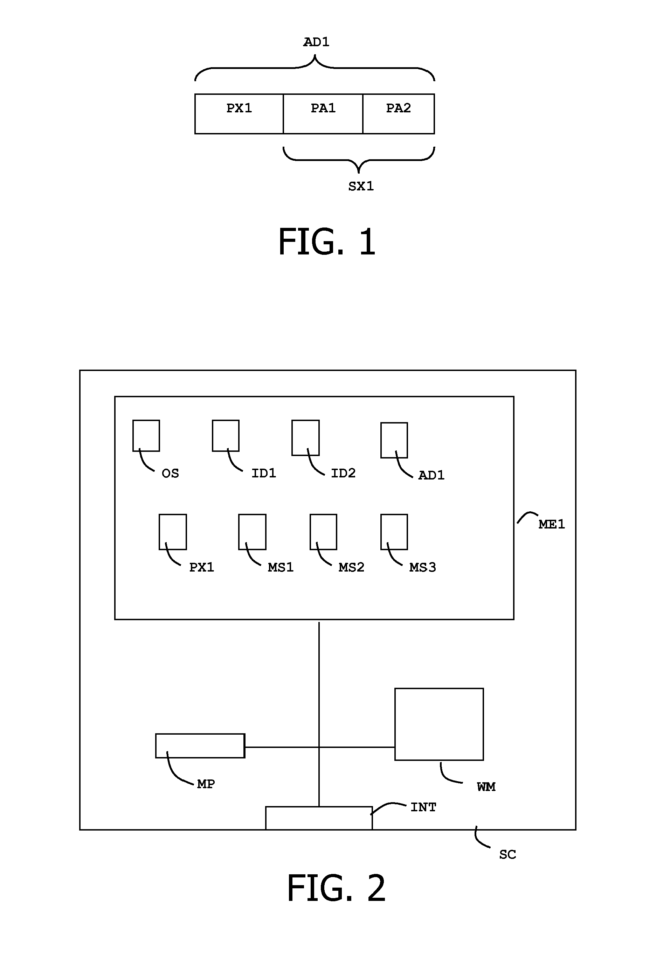

**Figure 1** shows the structure of an IP address generated according to the invention.

An Internet Protocol address AD1 comprises two elements: a prefix PX1 and a suffix SX1. The suffix SX1 is made of two parts PA1 and PA2.

**Figure 2** shows an example of architecture of an electronic token SC according to an embodiment of the invention. The token SC contains a microprocessor MP, a communication interface INT, a non volatile memory ME1, and a working memory WM. The working memory may be a RAM memory. The communication interface INT is intended to be connected to a host machine and allows exchanging data with the connected host machine. The communication interface INT may be a contactless or a contact interface. The host machine may be a Personal Computer, a Mobile Phone, or any host able to connect the token SC. Alternatively, the communication interface INT may be intended to be connected to a network without intermediate host machine. In particular, the token may have its own power supply.

The memory ME1 may be an EEPROM or a Flash memory. The memory ME1 contains an operating system OS, a token identifier ID2, an identifier ID1, a prefix PX1 and three means MS1, MS2 and MS3. In the example of Figure 2, the memory ME1 is implemented as a unique non volatile memory. The memory ME1 may also be implemented as any combination of several non volatile memories of different types.

The identifier ID1 is associated to an external entity. In other words, the identifier ID1 reflects the identity of the associated external entity. For example, the external entity may be the manufacturer of the token SC or the vendor of the token SC. The value of the identifier ID1 may be generated from a Token Manufacturer identifier. For example, the value of the identifier ID1 may be built from the Card Manufacturer Identifier when the token is a smart card. The value of identifier ID1 may also be generated from the value of the Country indicator as defined by ISO/IEC 7816-4 and ISO/IEC 7812 standards.

The identifier ID2 may be generated from the value of the Card Serial Number when the token is a smart card. Each token serial number (i.e. Card Serial Number) is unique in order to guarantee the tracking of each token, in particular for analyzing tokens coming from the field.

In the case of IPv6 address, the prefix PX1 is a 64-bits string. The prefix PX1 value may be defined by an administration entity or may respect infrastructure rules. The prefix PX1 value may have a static value or may be dynamically set. For example PX1 may be set with the value 0xFE80 0000 0000 0000 for a link-local address.

The means MS1 is able to generate the part PA1 from the identifier ID1. For example, PA1 may be set with the full value of the identifier ID1 or may be an extract of the identifier ID1. The part PA1 is generated through an injective function in order to guarantee that each generated PA1 correspond to a unique external entity.

The means MS2 is able to generate the part PA2 from the identifier ID2 by applying a function F. The function F is an injective function. In other words, every unique argument produces a unique result. Since the identifier ID2 is assumed to be unique for all tokens associated to the external entity, each value of PA2 is unique.

Advantageously, the function F may be a bijective function.

The means MS3 is able to generate a suffix SX1 from the two parts PA1 and PA2. In a preferred embodiment, the two parts PA1 and PA2 are concatenated for generating the suffix SX1.

Advantageously, the operating system OS may comprise a virtual machine, in particular a Java ® virtual machine or a .Net ® virtual machine.

The microprocessor MP cooperates with the working memory WM and is intended to run the operating system OS. The three means MS1, MS2 and MS3 may be either software applications run by the microprocessor MP or hardware designed. These three means may be implemented as three distinct elements or merged in one or several elements.

In a preferred embodiment, the three means are implemented as three different software components.

In a preferred embodiment, the token SC is a smart card and the identifier ID2 may be the Integrated Circuit Card Identifier (ICCID).

Many external entities may have their own set of electronic tokens. Each external entity is assumed to have a unique identifier which allows to distinguish each entity. Each electronic token associated to an external entity is assumed to have its own unique identifier. In other words, for a given entity, all associated tokens have their own unique identifier which allows to distinguish each token. Thanks to the invention, all generated second parts of suffix are unique for a given external entity and all generated first parts of suffix are unique among all existing external entity. Thus each electronic token which may be deployed on the field, may have a unique IP address suffix thanks to the present invention.

According to IPv6 requirements, the suffix SX1 is a 64-bits string. For example the suffix SX1 may be the concatenation of three parts: a 10-bits part comprising a country code, a 8-bits part corresponding to the Token Manufacturer Identifier and a 46-bits part corresponding to PA2.

Alternatively, the suffix SX1 may have a 16-bits part corresponding to the combination country code/Token Manufacturer Identifier and a 48-bits part corresponding to PA2.

In one embodiment the function F may be a shifting function. For example the function F may be the 1bit-shifting function which moves every bits of a string to the left (the first bit becoming the last bit). For example, F(01001101)= 10011010.

An example of embodiment of the method of generating addresses according to the invention is described below. The method comprises several steps.

In this embodiment, the electronic token is a smart card comprising a smart card web server. The smart card is associated to an external entity. In this example, the external entity is the smart card issuer. An identifier ID1 specific to the card issuer is stored in the token. Another identifier ID2 specific to the card itself is stored in the token. For example, the identifier ID2 may be the card serial number.

A first part PA1 of the suffix SX1 is generated into the token from the identifier ID1. For example, PA1 is set with value of ID1.

A second part PA2 of the suffix SX1 is generated into the token from the identifier ID2. The part PA2 is computed thanks to a function F which is an injective function.

Advantageously, the suffix SX1 is generated from the two parts PA1 and PA2 into the token. Then the complete address AD1 is generated from both the prefix PX1 and the suffix SX1. The address AD1 is then stored into the token. In a further step, the token sends the complete address AD1 to a remote machine. Alternatively, the token may send the two parts PA1 and PA2 to a connected or remote machine which generates the suffix SX1 and the full address AD1.

In one embodiment, the token is linked to a local network where one or several machines are connected. The token address AD1 to be generated is a link-local address. The token address is a network address which is intended only for communications within the local network (i.e. a link) or within a segment of the local network. This link-local address allows addressing the token without using a globally-routable address prefix. The prefix PX1 may be preset and stored in both the token and a remote machine connected to the local network.

Alternatively, the prefix PX1 may be defined into a remote machine connected to the local network and sent to the token SC by the remote machine.

After the generation of the suffix SX1, the token SC may send the suffix SX1 to the remote machine. Thus both the token and the remote machine have the address AD1 of the token. The token may use the Stateless Auto-configuration protocol as defined in ETSI TS 102.483 standard. According to this embodiment, the link-local address AD1 is intended to be used in token local network only. Thus the prefix PX1 may be set with a fixed value according to the local to the Stateless Auto-configuration standard. In this case the link-local address AD1 may be unique in the local network only.

The sending of the suffix SX1 (or the full address AD1) may be performed thanks to multicast messages through the interface INT. The multicast messages may be sent with IPv6/ICMPv6 protocol or any available protocol. The multicast mechanism allows sending the token address (or the suffix SX1 or part of the token address) to a plurality of machines.

Alternatively, the suffix SX1 (or the full address AD1) may be sent to a unique machine which forwards the suffix SX1 (or the full address AD1) to all relevant machines. The unique machine may be already identified and known by the token. Alternatively, the token may send the suffix in response to a request from a remote machine.

Thus the generated link-local address may be used by all machines directly connected to the token interface INT via a local network.

In another embodiment, the token must be accessed by machines that are outside the local network. In this case, the token address AD1 to be generated is a global address. This global address allows addressing the token from any point of a network connected to the local network of the token. The global address must be a globally-routable address and must be globally unique. The prefix PX1 may be defined by a router or a remote machine and sent to the token SC. The prefix PX1 may be allocated to a set of tokens or to a single token. The global address AD1 is spread by the infrastructure so as to provide any relevant machines with the generated token address AD1. In particular, routers may be in charge of managing packets addressed to networks which are not directly reachable by the interface INT of the token.

Advantageously, the function F may be irreversible. In other words, the input data of F cannot be retrieved from the corresponding output data. Thus the generated part PA2 does not allow computing the identifier ID2 which has been used for generating the part PA2. When the identifier ID2 is the ICCID, the ICCID may be kept secret. For example, the function F may be a hash function.

In one embodiment the function F may be the combination of the SHA-1 (Secure Hash Algorithm) function and a truncate function which set the size of the result to a 46-bits string.

While the preferred embodiments of the present invention have been described as above, the scope of the present invention shall not be limited thereto, and those skilled in the art can make various variations and modifications to the embodiments without departing from the scope of the present invention. All these variations and modifications would fall within the scope of the present invention.

An advantage of the invention is to ensure that there is no collision of address among tokens issued by different entities. The uniqueness of generated IP address is guaranteed thanks to uniqueness of the suffix.

Thanks to the invention, the token issuer is free to implement the function F, while the function F remains an injective function. Thus the token issuer may select the most appropriate implementation of the function F for its tokens.

## Claims

1. A **method** of generating an Internet Protocol address (AD1) intended to be assigned to a portable electronic token (SC), said address (AD1) being made of a prefix (PX1) and a suffix (SX1), a first identifier (ID1) being associated to an external entity, a second identifier (ID2) being associated to said token (SC), the token (SC) comprising said first and second identifiers (ID1, ID2),
**characterized in that** said suffix (SX1) comprises first and second parts (PA1, PA2) and **in that** said method comprises the following steps:
a) in said token (SC), generating said first part (PA1) from said first identifier (ID1),
b) in said token (SC), generating said second part (PA2) from said second identifier (ID2) by applying a function F, said function F being an injective function.

2. A method according to claim 1, wherein said Internet Protocol address (AD1) is an IPV6 address.

3. A method according to one of claims 1 to 2, wherein the external entity is the manufacturer of said token (SC) or the vendor of said token (SC).

4. A method according to one of claims 1 to 3, wherein the function F is an irreversible function.

5. A method according to one of claims 1 to 4, wherein said function F is based on a hash function.

6. A method according to one of claims 1 to 5, wherein said token (SC) is a smart card or a secure token.

7. A **portable electronic token** (SC) comprising first and second identifiers (ID1, ID2), said first identifier (ID1) being associated to an external entity, said second identifier (ID2) being associated to said token (SC), an Internet Protocol address (AD1) being intended to be assigned to said electronic token (SC), said address (AD1) being made of a prefix (PX1) and a suffix (SX1),
**characterized in that** said suffix (SX1) is made of first and second parts (PA1, PA2), **in that** said electronic token (SC) comprises a first means (MS1) able to generate the first part (PA1) from said first identifier (ID1) and **in that** said electronic token (SC) comprises a second means (MS2) able to generate the second part (PA2) from said second identifier (ID2) by applying a function F, said function F being an injective function.

8. A electronic token (SC) according to claim 7, wherein said electronic token (SC) comprises a third means (MS3) able to generate said suffix (SX1) from said first and second parts (PA1, PA2).

9. A electronic token (SC) according to one of claims 7 to 8, wherein said Internet Protocol address (AD1) is an IPv6 address.

10. A electronic token (SC) according to one of claims 7 to 9, wherein the external entity is the manufacturer of said token (SC) or the vendor of said token (SC).

11. A electronic token (SC) according to one of claims 7 to 10, wherein the function F is an irreversible function.

12. A electronic token (SC) according to one of claims 7 to 11, wherein said function F is based on a hash function.

13. A electronic token (SC) according to one of claims 7 to 12, wherein said token (SC) is a smart card or a secure token.
